(19) Europäisches Patentamt
European Patent Office
Office européen des brevets

(11) **EP 1 368 164 B1**

(12) **EUROPÄISCHE PATENTSCHRIFT**

(45) Veröffentlichungstag und Bekanntmachung des Hinweises auf die Patenterteilung:
**16.09.2015   Patentblatt 2015/38**

(21) Anmeldenummer: **02712826.3**

(22) Anmeldetag: **19.01.2002**

(51) Int Cl.:
***B26F 1/28*** *(2006.01)*

(86) Internationale Anmeldenummer:
**PCT/EP2002/000533**

(87) Internationale Veröffentlichungsnummer:
**WO 2002/068160 (06.09.2002 Gazette 2002/36)**

(54) **VERFAHREN UND VORRICHTUNG ZUM LOCHEN VON BAHNARTIGEM MATERIAL**

METHOD AND DEVICE FOR PUNCHING A WEB-LIKE MATERIAL

PROCEDE ET DISPOSITIF DESTINES A PERFORER UN MATERIAU EN FORME DE BANDE

(84) Benannte Vertragsstaaten:
**AT BE CH CY DE DK ES FI FR GB GR IE IT LI LU MC NL PT SE TR**

(30) Priorität: **24.02.2001   DE 10109100**

(43) Veröffentlichungstag der Anmeldung:
**10.12.2003   Patentblatt 2003/50**

(73) Patentinhaber: **AFS ENTWICKLUNGS + VERTRIEBS GMBH
86497 Horgau (DE)**

(72) Erfinder: **ARLT, Gerhard
86850 Fischach (DE)**

(74) Vertreter: **Rapp, Bertram et al
Charrier Rapp & Liebau
Patentanwälte
Fuggerstrasse 20
86150 Augsburg (DE)**

(56) Entgegenhaltungen:
**DE-A- 2 222 725     DE-C- 3 923 694
US-A- 2 678 373     US-A- 4 780 803**

**Beschreibung**

Die Erfindung betrifft ein Verfahren und eine Vorrichtung zum Lochen von bahnartigem Material nach den Oberbegriffen der Ansprüche 1 bzw. 5.

Zur Vorbehandlung der Oberfläche von bahnartigem Material, insbesondere Kunststoffolie, ist es bekannt, diese Oberfläche einer elektrischen Corona-Entladung auszusetzen. Durch diese Corona-Vorbehandlung vergrößert sich die Oberflächenspannung einer Kunststoffolie aufgrund noch nicht im Detail geklärter molekularer Mechanismen derart, daß die Oberfläche beispielsweise mit Farbe bedruckbar wird, während Farbe auf einer unbedruckten Oberfläche abperlt. Ein Corona-Generator zur Vorbehandlung von Folien ist beispielsweise Gegenstand der DE 39 23 694 Cl.

Ein derartiger Corona-Generator findet jedoch nur Einsatz innerhalb einer Corona-Oberflächenvorbehandlungsanlage zur Modifikation der gesamten Oberfläche einer Kunststoffolie.

In vielen Fällen besteht darüber hinaus oder daneben das Bedürfnis, eine Kunststoffolie mit Löchern zu versehen, beispielsweise, wenn die Kunststoffolie als Verpackungsmaterial (Verpackungsbeutel) für frische Backwaren verwendet werden soll. Hier ist zur Erhaltung der Konsistenz der Backwaren und zur Vermeidung von Schimmelbildung ein Luftaustausch mit der Umgebung erforderlich. Entsprechende Behältnisse müssen daher Öffnungen, vorzugsweise kreisrunde Löcher aufweisen. Diese Löcher werden üblicherweise mechanisch erzeugt, beispielsweise durch Stanzen oder durch andere mechanische Bearbeitungsformen. Hierbei ist von Nachteil, daß die mechanischen Stanzwerkzeuge relativ schnell verschleißen und ausgetauscht bzw. geschliffen werden müssen. Da das mechanische Stanzen üblicherweise im Rahmen der Folienherstellung oder -weiterverarbeitung erfolgt, die Stanzmaschinen sich also innerhalb des Fertigungsprozesses befinden, besteht darüber hinaus der Nachteil, daß die ausgestanzten Kunststoffblättchen nach kurzer Zeit zu einer erheblichen Verschmutzung der gesamten Anlage führen und aufgrund ihrer geringen Dicke auch in sensible Bereiche der Anlage, wie z. B. Lagerachsen, Schmiernippel oder Hochspannungsteile gelangen. Die Anlage muß daher regelmäßig gesäubert und häufig auch heruntergefahren werden, um eine Säuberung dieser sensiblen Bereiche zu ermöglichen.

Schließlich ist es bekannt, Löcher mit Hilfe von heißen Nadelwalzen in Kunststoffolien einzubringen. Dieses Verfahren hat jedoch den Nachteil, daß die erzeugbare Lochgröße begrenzt ist und typischerweise unter 2 mm liegt; größere Lochdurchmesser, wie sie beispielsweise zur Verpackung von bestimmter Waren benötigt werden, können nicht erzeugt werden.

Schließlich wurden Löcher auch bereits mit Hilfe von Hochspannungsentladungen in Filterpapier für Zigaretten eingebracht. Dies hat jedoch den Nachteil, daß die Lochgröße nicht definierbar ist, da sie von einer Vielzahl zufälliger elektrischer Parameter abhängt und daß auf diese Weise nur Löcher sehr geringen Durchmessers, weit unter 1 mm, erzeugt werden können. Ferner schien dieses Verfahren auf Papier beschränkt.

US 2,678,373 zeigt ein Verfahren gemäß dem Oberbergriff des Anspruchs 1 und eine Vorrichtung gemäß dem Oberbegriff des Anspruchs 5.

Es besteht daher die Aufgabe, ein Verfahren und eine Vorrichtung zum Lochen bahnartiger Materialien so weiterzubilden, daß die Lochgröße definiert ist und auch große Löcher mit mehreren Millimetern Durchmesser in Kunststoffolien erzeugt werden können, wobei die Durchführung des Verfahrens schnell und wartungsarm sein soll.

Gelöst wird diese Aufgabe mit den Merkmalen der Ansprüche 1 bzw. 5. Vorteilhafte Ausgestaltungen sind den jeweiligen Unteransprüchen entnehmbar.

Ein Ausführungsbeispiel der Erfindung wird im Folgenden unter Bezugnahme auf die begleitenden Zeichnungen näher beschrieben, welche zeigen:

Figur 1:  einen Schaltplan des Generators zur Ansteuerung einer erfindungsgemäßen Vorrichtung zur Durchführung des erfindungsgemäßen Verfahrens;

Figur 2:  einen Querschnitt durch eine Elektrodenanordnung; und

Figur 3:  den Verlauf des Stromes und des Phasenwinkels zwischen Strom und Spannung bei Durchführung des erfindungsgemäßen Verfahrens.

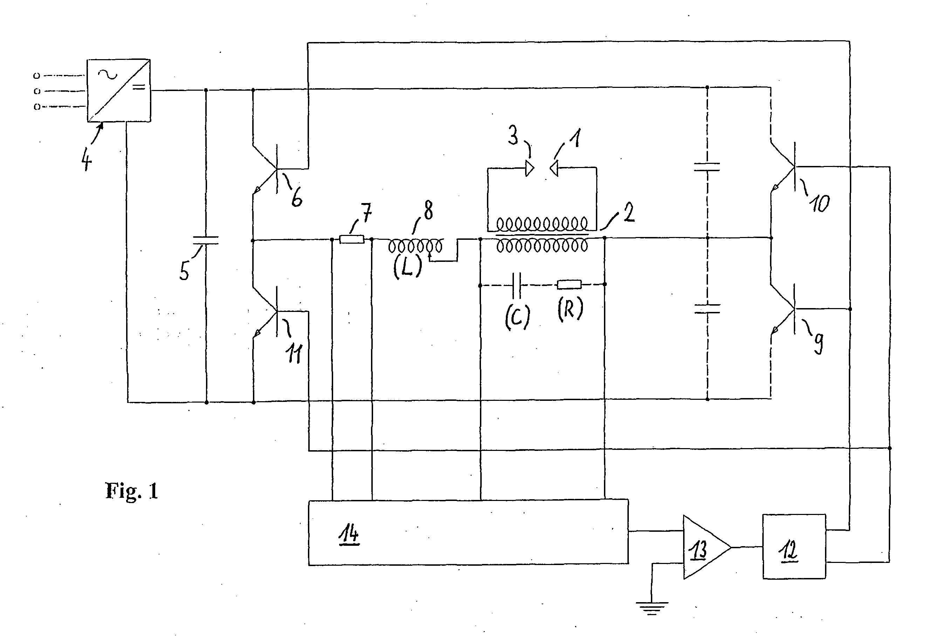

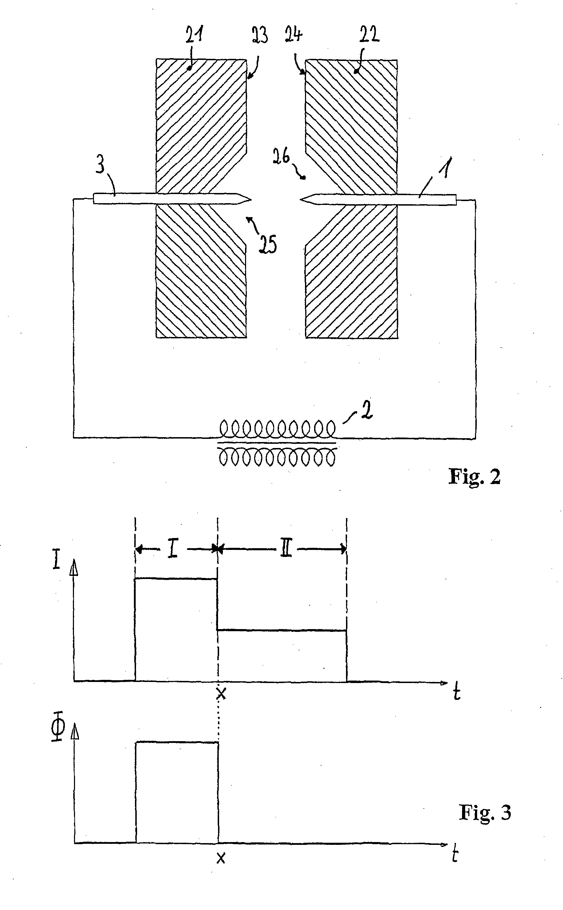

Wie aus Figur 1 ersichtlich weist die erfindungsgemäße Vorrichtung zwei Elektroden 1 und 3 auf (im Detail in Figur 2 dargestellt), welche jeweils in einer Halterung 21 bzw. 22 aus elektrisch isolierendem Material rundum gelagert sind. Eine Elektrode 1 ist an ein Ende der Sekundärwicklung eines Transformators 2 angeschlossen, an deren anderes Ende die Elektrode 3 angeschlossen ist.

Die Stromversorgung der gesamten Schaltung erfolgt über eine Gleichspannungsquelle (bzw. ein Netzgerät) 4, in deren Ausgang ein Kondensator 5 geschaltet ist. Parallel zu diesem Kondensator 5 ist eine erste Serienschaltung geschaltet, bestehend aus einem ersten elektronischen Schalter 6, einem Meßwiderstand 7, einer Drossel 8 mit Induktivität L, der Primärwicklung des Transformators 2 und einem zweiten elektronischen Schalter 9. Die elektronischen Schalter 6 und 9 bilden ein erstes Schalterpaar, das gleichzeitig durchgeschaltet wird. Parallel zu dem Kondensator 5 ist eine zweite Serienschaltung geschaltet, bestehend aus einem dritten elektronischen Schalter 10, der Primärwicklung des Transformators 2, der Drossel 8, des Meßwiderstandes 7 und einem vierten elektronischen Schalter 11. Die Schalter 10 und 11 bilden ein zweites Schalterpaar, welches in Gegenphase zu dem ersten Schalterpaar getaktet wird. Alle Schalter 6, 9, 10 und 11 weisen die gleiche Durchlassrichtung auf und sind vorzugsweise als Halbleiterbauelemente ausgebildet, insbesondere als MOSFETs oder IGBTs. Anstelle der Schalter 9 und 10 können auch Kondensatoren in Gestalt einer Halbbrücke eingesetzt werden.

Die Steuerelektroden der Schalter 6 und 9 sind mit einem Ausgang und die Steuerelektroden 10 und 11 mit dem anderen Ausgang eines Frequenzgenerators 12 verbunden, wodurch die Schalterpaare gegenphasig getaktet werden können. Die Frequenz des Frequenzgenerators 12 ist variabel und hängt von einem Eingangssignal ab, wozu der Eingang des Frequenzgenerators 12 verbunden ist mit dem Ausgang eines Operationsverstärkers 13. Der eine Eingang dieses Operationsverstärkers 13 liegt an einem Bezugspotential, beispielsweise Erde, während der andere Eingang des Operationsverstärkers 13 verbunden ist mit dem Ausgang einer Phasenmeßschaltung 14. Zwei Eingänge dieser Phasenmeßschaltung 14 sind verbunden mit den beiden Enden des Meßwiderstandes 7 während der dritte und vierte Eingang verbunden sind mit der Primärwicklung des Transformators 2.

Der genaue Aufbau der Elektroden 1 und 3 und ihrer Halterungen 21 und 22 ist im Querschnitt in Figur 2 dargestellt, wobei hier aus Vereinfachungsgründen nur der Transformator 2 aus Figur 1 dargestellt ist. An die Primärseite dieses Transformators 2 schließt sich das in Figur 1 dargestellte Schaltbild an.

Die beiden Elektroden 1 und 3 sind Wolframelektroden, und sind im wesentlichen kolinear angeordnet. An ihren aufeinander zuweisenden Enden sind die Elektroden 1 und 3 zugespitzt, wie es in Figur 2 dargestellt ist. Die Elektroden sind rundum in elektrisch isolierenden Halterungen 21 und 22 gelagert, die im wesentlichen blockförmig ausgebildet sind und mit ihren Vorderseiten 23 und 24 einander im Abstand von etwa 2 mm gegenüberstehen. Im Bereich der Elektroden 1 und 2 weisen die Halterungen 21 und 22 an diesen Vorderseiten 23 und 24 in Folienlaufrichtung verlaufende Nuten 25 bzw. 26 auf, wobei die Elektroden 1 und 3 aus der Mitte dieser Nuten 25 und 26 hervorstehen. Die Spitzen der Elektroden 1 und 3 fluchten etwa mit den Vorderflächen 23 bzw. 24 der jeweiligen Halterung 21 bzw. 22.

Die Arbeitsweise der Schaltung wird nachstehend, auch unter Bezugnahme auf Figur 3, beschrieben.

Die beiden Elektroden 1 und 3 stellen elektrisch gesehen eine Reihenschaltung aus einem Kondensator und einem Ohmschen Widerstand dar. Diese ohmisch-kapazitive Last liegt parallel zur Sekundärwicklung des Transformators 2. Auf der Primärseite des Transformators 2 erscheint diese Impedanz entsprechend dem Übersetzungsverhältnis des Transformators. Vernachlässigt man dessen Wicklungskapazität, Streuinduktivität und dessen ohmsche Verluste, dann liegt parallel zur Primärwicklung des Transformators 2 eine Serienschaltung, bestehend aus der gespiegelten Kapazität C und dem gespiegelten Ohmschen Widerstand R. Die Werte von C und R sind variabel, entsprechend den verschiedenen zu lochenden Materialien und deren verschiedenen dielektrischen Eigenschaften sowie den verschiedenen mechanischen Abmessungen zwischen den beiden Elektroden 1 und 3, insbesondere ihres Abstandes und ihrer Form.

Zusammen mit der Induktivität L der Drossel 8 ergibt sich somit ein Serienresonanzkreis aus der Induktivität L, der (übersetzten) Kapazität C und dem (übersetzten) Widerstand R.

Wird dieser Serienresonanzschwingkreis mit seiner Resonanzfrequenz erregt, dann fließt ein Strom ohne Blindanteil durch den Schwingkreis, d. h. die Last wird reell und weist den Ohmschen Widerstand R auf. Die Scheinfrequenz dieses Resonanzkreises beträgt

$$f_0 = \frac{1}{\sqrt{LC}}$$

Die Güte beträgt

$$Q = \frac{1}{R}\sqrt{\frac{L}{C}}$$

Die Resonanzfrequenz beträgt dann

$$f_{res} = f_0 \sqrt{1 - \frac{1}{2Q^2}}$$

Diese Verhältnisse werden erreicht, wenn der Frequenzgenerator Signale mit der Resonanzfrequenz dieses Serienresonanz-Schwingkreises erzeugt.

Wird nun zwischen die Spitzen der sich gegenüberstehenden Elektroden 1 und 3 ein Dielektrikum, beispielsweise in Form der mit einem Loch zu versehenden Kunststoffolie, gebracht, erhöht sich die Kapazität C des Kondensators aufgrund der positiven Dielektrizitätskonstanten der Kunststoffolie (Dielektrikum), was jedoch für die nachfolgende Betrachtung nur von geringer Bedeutung sein wird.

Soll nun ein Loch in die Kunststoffolie zwischen den Elektroden 1 und 3 eingebracht werden, wird zunächst eine Wechselspannung bei der experimentell ermittelten Resonanzfrequenz des Serienschwingkreises mit Dielektrikum angelegt, und zwar bei einer Spannungsamplitude von etwa 20 kV. Die Resonanzfrequenz liegt erfahrungsgemäß bei 35 bis 70 kHz. Dieses Verfahrensstadium ist in Figur 3, wo der Strom I bzw. die Phasendifferenz zwischen Strom und Spannung IV gegen die Zeit aufgetragen sind mit I gekennzeichnet. Der Strom I ist hier relativ hoch und es besteht eine erhebliche Phasendifferenz IV zwischen Strom und Spannung. Während des Anliegens dieser hochfrequenten Hochspannung findet zwischen den Spitzen der Elektroden 1 und 3 und der zu lochenden Kunststofffolie eine Corona-Entladung statt, und zwar so lange, bis die Folie aufgrund der auf sie einwirkenden elektrischen Energie und auch der damit verbundenen Hitzeerzeugung, lokal durchbrennt, also ein winziges Loch genau zwischen den beiden Elelctronenspitzen entsteht. Der Punkt des Durchbrennens ist in Figur 3 mit X gekennzeichnet und stellt den Übergang von der Betriebsphase I zu der Betriebsphase II dar. In diesem Zustand nimmt die Kapazität C des Kondensators geringfügig ab, da das Dielektrikum fehlt. Gleichzeitig nimmt jedoch der Ohmsche Widerstand sehr stark ab, da ein elektrischer Durchbruch stattgefunden hat. Im selben Moment verschiebt sich auch der Phasenwinkel zwischen Strom und Spannung von einem positiven Wert im Bereich von 80° bis 90° auf nur knapp über 0°, da bei der nunmehr reellen Last Strom und Spannung im wesentlichen in Phase sind. Der Phasensprung ist Figur 3, unten entnehmbar. Eine oder mehrere dieser Größen oder weitere elektrische Größen können gemessen werden, wodurch das Auftreten des ersten winzigen Loches in der Folie detektiert werden kann.

Sobald die Messung einer dieser Größen (z. B. Phasenwinkel oder Widerstand) einen Durchbruch der Folie ergibt, wird der Frequenzgenerator 12 so angesteuert, daß trotz der nun veränderten elektrischen Bedingungen die Resonanzfrequenz wieder eingestellt wird. Erfahrungsgemäß liegt die neue Resonanzfrequenz erheblich unter der ursprünglichen Frequenz, z. B. zwischen 15 und 30 kHz. Zwar ergibt sich aufgrund obiger Beziehung eine Erhöhung der Resonanzfrequenz durch die Verminderung der Kapazität C (durch den Wegfall des Dielektrikums); dies ist jedoch, verglichen mit dem wesentlich stärkeren Effekt des praktisch vollständigen Wegfalls des Widerstands R beim Durchbruch praktisch vernachlässigbar. Dominiert wird die oben genannte Gleichung also durch den Effekt des Ohmschen Widerstandes, bei dessen Reduzierung die Resonanzfrequenz also stark absinkt.

Die Einstellung der neuen Resonanzfrequenz erfolgt, um auch während des nachfolgenden Brennbzw. Schmelzvorganges kontrollierte Bedingungen sicher zu stellen, damit die gewünschte, definierte Lochgröße auch erreicht wird. Gleichzeitig mit der Herabsetzung der Frequenz nach Detektion des Durchbruches auf den neuen Resonanzwert beginnt auch ein Zeitgeber zu laufen, und zwar über eine vorbestimmte und voreingestellte Zeitspanne, z. B. 50 ms. Diese Zeitspanne entspricht der Länge der Behandlungsphase II, wie sie in Figur 3 dargestellt ist. Während dieser Zeitspanne schmilzt das zunächst winzige Loch kontrolliert auf und erreicht den gewünschten Durchmesser. Zwar verdampft in dieser Phase auch Material, im wesentlichen schmilzt das Material jedoch und konzentriert sich am Rande des erzeugten Loches zu einem beidseitigen winzigen Wulst.

Die Größe des Loches wird ausschließlich bestimmt durch die Zeitspanne des Brennens bzw. Schmelzens, wobei zwischen der durch den Zeitgeber bestimmten Zeitdauer und dem Durchmesser des erzeugten Loches ein reproduzierbarer Zusammenhang besteht.

Von entscheidender Bedeutung für die Funktion der Erfindung ist die Anpassung der Resonanzfrequenz an die nach dem Aufbrechen der Folie geänderten Resonanzbedingungen. Wenn diese Frequenz nicht geändert würde, also bei der ursprünglichen Resonanzfrequenz verbliebe, wäre der Schwingkreis außer Resonanz und die Folie würde nicht definiert brennen bzw. schmelzen. Damit wäre keine Reproduzierbarkeit der Lochgröße gegeben, da es hierzu auf die genaue Einhaltung der Einwirkzeit bei der (zweiten) Resonanzfrequenz ankommt. Ein weit längere Brennzeit für das Erreichen eines bestimmten Lochdurchmessers wäre zu dem die Folge.

In einer alternativen Ausführungsform ist es zum Einbrennen von Löchern in Papier oder in andere Materialien, welche aufgrund ihrer Porosität keine Hochspannungsisolatoren sind, auch möglich, die Verfahrensschritte (a und b) wegzulassen und unmittelbar mit der zweiten, im Bereich der Resonanzfrequenz des Schwingkreises ohne Dielektrikum liegenden Frequenz zu arbeiten. Auch hier ist es jedoch von Bedeutung, daß gem. Merkmal (d) die Wechselspannung nach Ablauf einer vorbestimmten, ab dem Einschalten gemessenen Zeitspanne abgeschaltet wird. Die Lochgröße wird auch hier durch die Dauer der angelegten Wechselspannung bestimmt.

## Patentansprüche

1. Verfahren zum Einbringen eines Loches definierter Größe in ein bahnartiges Material, welches sich zwischen den einander zugewandten Enden zweier Elektroden (1, 3) befindet, durch eine elektrische Entladung zwischen den Elektroden (1, 3), wobei die Elektroden (1, 3) den kapazitiven und ohmschen Teil eines Serienresonanz-Schwingkreises bilden, **dadurch gekennzeichnet, daß** das bahnartige Material eine dielektrische Kunststofffolie (Dielektrikum) ist und folgende Schritte ausgeführt werden:

   a) Anlegen einer Wechselspannung mit einer ersten Frequenz, welche im Bereich der Resonanzfrequenz des Schwingkreises mit Dielektrikum liegt, zwischen den Elektroden (1, 3), wodurch zwischen mindestens einer Elektrode (1) und der Folie eine Corona-Entladung entsteht,
   b) Gleichzeitiges Messen einer elektrischen Größe, deren Wert vom Vorhandensein des Dielektrikums zwischen den Elektroden (1, 3) abhängt,
   c) Ändern der Frequenz der Wechselspannung auf eine zweite, im Bereich der Resonanzfrequenz des Schwingkreises ohne Dielektrikum liegende Frequenz, sobald sich die elektrische Größe um mehr als einen vorbestimmten Betrag geändert hat,
d) Abschalten der Wechselspannung nach Ablauf einer vorbestimmten, ab dem Ändern gemessenen Zeitspanne.

2. Verfahren nach Anspruch 1, **dadurch gekennzeichnet, daß** die Wechselspannung zwischen 10 und 50 kV bei einer Frequenz zwischen 10 und 100 kHz liegt.

3. Verfahren nach einem der voranstehenden Ansprüche, **dadurch gekennzeichnet, daß** die Zeitspanne zwischen 5 und 500 ms liegt.

4. Verfahren nach einem der voranstehenden Ansprüche, **dadurch gekennzeichnet, daß** die elektrische Größe die Phasendifferenz zwischen Strom und Spannung ist.

5. Vorrichtung zum Einbringen von Löchern definierter Größe in ein bahnartiges Material, welches sich zwischen den einander zugewandten Enden zweier Elektroden (1, 3) befindet, durch eine elektrische Entladung zwischen den Elektroden (1, 3), wobei die Elektroden (1, 3) den kapazitiven und ohmschen Teil eines Serienresonanz-Schwingkreises bilden, **dadurch gekennzeichnet, daß** das die Vorrichtung zum Einbringen von Löchern in eine dielektrische Kunststoffolie (Dielektrikum) aufweist:

a) einen Generator zur Erzeugung einer Wechselspannung mit einer ersten Frequenz, welche im Bereich der Resonanzfrequenz des Schwingkreises mit Dielektrikum liegt, zwischen den Elektroden (1, 3), wodurch zwischen mindestens einer Elektrode (1) und der Folie eine Corona-Entladung entsteht,
b) eine Messvorrichtung zum Messen einer elektrischen Größe, deren Wert vom Vorhandensein des Dielektrikums zwischen den Elektroden (1, 3) abhängt,
c) eine Umschaltvorrichtung zum Ändern der Frequenz der Wechselspannung auf eine zweite, im Bereich der Resonanzfrequenz des Schwingkreises ohne Dielektrikum liegende Frequenz, sobald sich die elektrische Größe um mehr als einen vorbestimmten Betrag geändert hat,
d) einen Zeitgeber und eine Abschaltvorrichtung zum Abschalten der Wechselspannung nach Ablauf einer vorbestimmten, ab dem Ändern gemessenen Zeitspanne.

6. Vorrichtung nach Anspruch 5, **dadurch gekennzeichnet, dass** jede Elektrode (1, 3) mit einem Ende der Sekundärwicklung eines Transformators (2) verbunden ist, dessen Primärseite an eine Stromimpulse erzeugende Schaltung angeschlossen ist, welche einen Kondensator (5) und in Serie mit seiner Primärspule geschaltete elektronische Schalter (6, 9, 10, 11) umfaßt, wobei der Kondensator (5) und die Serienschaltung parallel zueinander geschaltet an eine Gleichspannungsquelle (4) angeschlossen sind und die Schalter (6, 9, 10, 11) durch einen in seiner Frequenz veränderbaren Frequenzgenerator (12) gesteuert werden.

7. Vorrichtung nach einem der Ansprüche 5 oder 6, **dadurch gekennzeichnet, daß** mindestens eine Elektrode (1) an ihrem der anderen Elektrode (3) zugewandten Ende zugespitzt ausgebildet ist.

8. Vorrichtung nach einem der Ansprüche 5 bis 7, **dadurch gekennzeichnet, daß** die Elekroden (1, 3) aus Wolfram oder einer wolframhaltigen Legierung bestehen.

9. Vorrichtung nach einem der Ansprüche 5 bis 8, **dadurch gekennzeichnet, daß** jede Elektrode (1, 3) rundum in einer blockförmigen Halterung (21, 22) aus elektrisch isolierendem Material gelagert ist, die Vorderseite (23, 24) jeder Halterung (21, 22) mit der Spitze ihrer Elektrode (1, 3) fluchtet und jede Halterung (21, 22) eine in Folienlaufrichtung verlaufende Nut (25, 26) um die Spitze der Elektrode (1, 3) aufweist.

10. Vorrichtung nach einem der Ansprüche 5 bis 9, **dadurch gekennzeichnet, daß** der Abstand zwischen den beiden Elektroden (1, 3) 1 bis 10 mm beträgt.

## Claims

1. Method for creating a hole of defined size in a strip-like material which is located between the facing ends of two electrodes (1, 3) by an electrical discharge between the electrodes (1, 3), wherein the electrodes (1, 3) form the capacitive and ohmic part of a series resonance oscillating circuit, **characterised in that** the strip-like material is a dielectric plastic foil (dielectric) and the following steps are carried out:

a) an alternating current voltage with a first frequency which lies in the range of the resonance frequency of the oscillating circuit with the dielectric is applied between the electrodes (1, 3), through which a corona discharge occurs between at least one electrode (1) and the foil,
b) at the same time an electrical variable the value of which depends on the presence of the dielectric between the electrodes (1, 3) is measured,

c) the frequency of the alternating current voltage is changed to a second frequency lying in the range of the resonance frequency of the oscillating circuit without the dielectric as soon as the electrical variable has changed by more than a predetermined amount,

d) the alternating current voltage is switched off after a predetermined period of time measured from the change has elapsed.

2. Method according to claim 1, **characterised in that** the alternating current voltage lies between 10 and 50 kV with a frequency of between 10 and 100 kHz.

3. Method according to one of the preceding claims, **characterised in that** the period of time lies between 5 and 500 ms.

4. Method according to one of the preceding claims, **characterised in that** the electrical variable is the phase difference between current and voltage.

5. Device for creating holes of defined size in a strip-like material which is located between the facing ends of two electrodes (1, 3) by an electrical discharge between the electrodes (1, 3), wherein the electrodes (1, 3) form the capacitive and ohmic part of a series resonance oscillating circuit, **characterised in that** the device for creating holes in a dielectric plastic foil (dielectric) exhibits:

a) a generator for producing an alternating current voltage with a first frequency which lies in the range of the resonance frequency of the oscillating circuit with the dielectric between the electrodes (1, 3), through which a corona discharge occurs between at least one electrode (1) and the foil,

b) a measuring device for measuring an electrical variable the value of which depends on the presence of the dielectric between the electrodes (1, 3),

c) a switching device for changing the frequency of the alternating current voltage to a second frequency lying in the range of the resonance frequency of the oscillating circuit without the dielectric as soon as the electrical variable has changed by more than a predetermined amount,

d) a timer and a switch-off device for switching off the alternating current voltage after a predetermined period of time measured from the change has elapsed.

6. Device according to claim 5, **characterised in that** each electrode (1, 3) is connected to one end of the secondary winding of a transformer (2) the primary side of which is connected to a circuit producing current pulses which comprises a capacitor (5) and electronic switches (6, 9, 10, 11) connected in series with its primary coil, wherein the capacitor (5) and the series circuit are connected parallel to one another and connected to a direct current voltage source (4) and the switches (6, 9, 10, 11) are controlled by a frequency generator (12) the frequency of which can be altered.

7. Device according to one of claims 5 or 6, **characterised in that** at least one electrode (1) is pointed at its end facing the other electrode (3).

8. Device according to one of claims 5 to 7, **characterised in that** the electrodes (1, 3) are made of tungsten or of an alloy containing tungsten.

9. Device according to one of claims 5 to 8, **characterised in that** each electrode (1, 3) is mounted surrounded in a block-shaped mounting (21, 22) made of electrically insulating material, the front side (23, 24) of each mounting (21, 22) is aligned with the tip of its electrode (1, 3) and each mounting (21, 22) exhibits a groove (25, 26) running in the running direction of the foil around the tip of the electrode (1, 3).

10. Device according to one of claims 5 to 9, **characterised in that** the gap between the two electrodes (1, 3) is 1 to 10 mm.

**Revendications**

1. Procédé servant à pratiquer un trou d'une dimension définie dans un matériau de type bande, qui se trouve entre les extrémités tournées les unes vers les autres de deux électrodes (1, 3), par une décharge électrique entre les électrodes (1, 3), sachant que les électrodes (1, 3) forment la partie capacitive et ohmique d'un circuit oscillant série LC, **caractérisé en ce que** le matériau de type bande est un film en plastique diélectrique (diélectrique), et **en ce qu'**on exécute les étapes suivantes consistant à :

a) appliquer une tension alternative présentant une première fréquence, qui est comprise dans la plage de la fréquence de résonance du circuit oscillant pourvu du diélectrique, entre les électrodes (1, 3), ce qui donne lieu à une décharge Corona entre au moins une électrode (1) et le film ;

b) mesurer de manière simultanée une grandeur électrique, dont la valeur dépend de la présence du diélectrique entre les électrodes (1, 3) ;

c) modifier la fréquence de la tension alternative de manière à l'établir à une deuxième fréquence comprise dans la plage de la fréquence de résonance du circuit oscillant sans diélectrique

dès que la grandeur électrique a été modifiée d'une valeur supérieure à une valeur prédéterminée ;

d) couper la tension alternative au terme d'un laps de temps prédéterminé mesuré à partir de la modification.

2. Procédé selon la revendication 1, **caractérisé en ce que** la tension alternative est comprise entre 10 et 50 kV à une fréquence comprise entre 10 et 100 kHz.

3. Procédé selon l'une quelconque des revendications précédentes, **caractérisé en ce que** le laps de temps est compris entre 5 et 500 ms.

4. Procédé selon l'une quelconque des revendications précédentes, **caractérisé en ce que** la grandeur électrique est la différence de phase entre le courant et la tension.

5. Dispositif servant à pratiquer des trous d'une grandeur définie dans un matériau de type bande, qui se trouve entre les extrémités tournées les unes vers les autres de deux électrodes (1, 3), par une décharge électrique entre les électrodes (1, 3), sachant que les électrodes (1, 3) forment la partie capacitive et ohmique d'un circuit oscillant série LC, **caractérisé en ce que** le dispositif servant à pratiquer des trous dans un film en plastique diélectrique (diélectrique) présente :

a) un générateur servant à produire une tension alternative présentant une première fréquence, qui est comprise dans la plage de la fréquence de résonance du circuit oscillant pourvu d'un diélectrique, entre les électrodes (1, 3), ce qui donne lieu à une décharge Corona entre au moins une électrode (1) et le film ;

b) un dispositif de mesure servant à mesurer une grandeur électrique, dont la valeur dépend de la présence du diélectrique entre les électrodes (1, 3) ;

c) un dispositif de commutation servant à modifier la fréquence de la tension alternative de manière à l'établir à une deuxième fréquence comprise dans la plage de la fréquence de résonance du circuit oscillant sans diélectrique, dès que la grandeur électrique a été modifiée d'une valeur supérieure à une valeur prédéterminée ;

d) un minuteur et un dispositif de coupure servant à couper la tension alternative au terme d'un laps de temps prédéterminé mesuré à partir de la modification.

6. Dispositif selon la revendication 5, **caractérisé en ce que** chaque électrode (1, 3) est reliée à une extrémité de l'enroulement secondaire d'un transformateur (2), dont le côté primaire est raccordé à un circuit générant des impulsions de courant, lequel circuit comprend un condensateur (5) et des commutateurs (6, 9, 10, 11) électroniques montés en série avec la bobine primaire dudit condensateur, sachant que le condensateur (5) et le circuit en série montés en parallèle l'un par rapport à l'autre sont raccordés à une source de tension continue (4) et que les commutateurs (6, 9, 10, 11) sont commandés par un générateur de fréquence (12) pouvant être modifié dans sa fréquence.

7. Dispositif selon l'une quelconque des revendications 5 ou 6, **caractérisé en ce qu'**au moins une électrode (1) est réalisée de manière effilée au niveau de son extrémité tournée vers l'autre électrode (3).

8. Dispositif selon l'une quelconque des revendications 5 à 7, **caractérisé en ce que** les électrodes (1, 3) sont constituées de tungstène ou d'un alliage contenant du tungstène.

9. Dispositif selon l'une quelconque des revendications 5 à 8, **caractérisé en ce que** chaque électrode (1, 3) est logée, au niveau de sa circonférence, dans un support (21, 22) en forme de bloc composé d'un matériau isolant électriquement, **en ce que** le côté avant (23, 24) de chaque support (21, 22) est aligné avec la pointe de son électrode (1, 3), et **en ce que** chaque support (21, 22) présente une rainure (25, 26) s'étendant dans le sens de déplacement du film, autour de la pointe de l'électrode (1, 3).

10. Dispositif selon 1"une quelconque des revendications 5 à 9, **caractérisé en ce que** la distance entre les deux électrodes (1, 3) présente une valeur comprise entre 1 et 10 mm.

Fig. 1

EP 1 368 164 B1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3923694
- US 2678373 A